# EUROPÄISCHE PATENTSCHRIFT

(11) **EP 0 311 812 B1**
(45) Veröffentlichungstag und Bekanntmachung des Hinweises auf die Patenterteilung: **22.03.1995**
(21) Anmeldenummer: 88115175.7
(22) Anmeldetag: 16.09.1988
(51) Int. Cl.: B01J 23/56, B01J 23/63, B01D 53/94

(54) **Katalysator und Verfahren zu seiner Herstellung**
Catalyst and process for making the same
Catalyseur et procédé pour sa fabrication

(30) Priorität: 16.10.1987 DE 3735033
(43) Veröffentlichungstag der Anmeldung: 19.04.1989
(73) Patentinhaber: DODUCO GMBH + Co Dr. Eugen Dürrwächter, 75172 Pforzheim (DE)
(72) Erfinder: Berndt, Malte, Dr., D-6920 Sinsheim-Rohrbach (DE); Ksinsik, Dieter, Dr., D-6920 Sinsheim-Rohrbach (DE)
(74) Vertreter: Twelmeier, Ulrich, Dipl.Phys.

(56) Entgegenhaltungen:
- EP-A- 0 130 833
- EP-A- 0 199 509
- DE-A- 3 436 400
- FR-A- 2 375 449
- US-A- 4 088 607
- US-A- 4 102 813
- US-A- 4 172 047
- US-A- 4 233 189
- PATENT ABSTRACTS OF JAPAN, Band 10, Nr. 166 (C-353), 13. Juni 1986;& JP-A-61 018 432 (MATSUSHITA DENKI SANGYO K.K.) 27-01-1986

## Beschreibung

Die Erfindung geht aus von Katalysatoren, insbesondere für die Reinigung der Abgase von Verbrennungskraftmaschinen, mit den im Oberbegriff des Anspruchs 1 angegebenen Merkmalen. Solche Katalysatoren und ein Verfahren zu ihrer Herstellung sind durch die DE-34 36 400 A1 bekanntgeworden. Bei den nach dem bekannten Verfahren hergestellten Katalysatoren ist das katalytisch wirksame Edelmetall in feiner Verteilung an ein gesintertes γ-Aluminiumoxidgerüst gebunden, welches durch ein Seltenerdmetalloxid stabilisiert ist. Die Verwendung von γ-Aluminiumoxid ist im Stand der Technik allgemein üblich, weil es eine poröse Struktur hat und deshalb zu einer großen wirksamen Katalysatoroberfläche führt. γ-Aluminiumoxid hat jedoch den Nachteil, dass es thermisch nicht stabil ist. Beginnend bei ungefähr 600° C und verstärkt ab 900° C wandelt sich γ-Aluminiumoxid über Zwischenstufen (Übergangs-Aluminiumoxid) in α-Aluminiumoxid um. Der Unterschied zwischen γ-Aluminiumoxid und α-Aluminiumoxid ist ähnlich dem Unterschied zwischen einer Tonscherbe und einer Porzellanscherbe: Die Tonscherbe ist porös, die Porzellanscherbe dicht gesintert. Bei der Umwandlung von γ-Aluminiumoxid in α-Aluminiumoxid werden demzufolge zunehmend Poren des Aluminiumoxidgerüsts geschlossen und dadurch an das Aluminiumoxid gebundenes, katalytisch wirksames Edelmetall eingeschlossen, so dass es für katalytische Reaktionen nicht mehr zur Verfügung steht und der mit dem Katalysator erzielbare chemische Umsatz kleiner wird.

Es sind auch Katalysatoren bekannt, bei denen das Edelmetall nicht auf γ-Aluminiumoxid, sondern unmittelbar auf α-Aluminiumoxid (US 4,172,047 und US 4,102,813), Zirkondioxid (US 4,233,189) oder Titandioxid (JP-A-61 018432) verankert wird, doch wird in allen diesen Fällen auf den Katalysatorträger kein Verbundpulver aus dem katalytisch wirksamen Edelmetall und einem Metalloxid aufgetragen, sondern das reine Edelmetall aus einer Edelmetallsalzlösung abgeschieden. Bei dieser Vorgehensweise wird die chemische Umsetzungsrate des Katalysators entscheidend durch die spezifische Oberfläche seines Überzuges bestimmt, denn diese bestimmt ihrerseits die wirksame Oberfläche des katalytisch wirksamen Metalls. Da aber Überzüge aus Zirkondioxid, Titandioxid und α-Aluminiumoxid eine viel kleinere spezifische Oberfläche haben als γ-Aluminiumoxid, erhält man auf diese Weise zwangsläufig Katalysatoren mit viel geringerer Umsetzungsrate als bei Katalysatoren auf der Basis von γ-Aluminiumoxid.

Es hat nicht an Versuchen gefehlt, die Temperatur, bis zu der ein Katalysator, bei dem das katalytisch wirksame Edelmetall an γ-Aluminiumoxid gebunden ist, betrieben werden kann, damit er eine vorgegebene Lebensdauer erreicht, zu erhöhen, und zwar durch Zusätze, die die Struktur des γ-Aluminiumoxids stabilisieren sollen (siehe z.B. DE-32 39 513 C2, DE-32 23 500 A1, EP 0199 509 A2). Zusätze, mit denen eine Stabilisierung des γ-Aluminiumoxids erreicht werden kann, sind gewisse hochtemperaturstabile Metalloxide, z.B. Thoriumoxid, Bariumoxid, Zirkonoxid oder Oxide der Seltenen Erdmetalle (Cer, Lanthan, Neodym, Prasiodym, Samarium) oder Mischungen von diesen. Durch solche Zusätze kann die Umwandlung von γ-Aluminiumoxid jedoch nicht verhindert, sondern nur zu etwas höheren Temperaturen verschoben und dadurch verzögert werden. Bei den Bemühungen um die Stabilisierung des γ-Aluminiumoxids sind in letzter Zeit allerdings keine großen Fortschritte mehr erzielt worden, weil seiner Stabilisierung durch Zusätze aus physikalischen Gründen Grenzen gesetzt sind. Einen Fortschritt brachte das in der DE-34 36 400 beschriebene Verfahren, gemäß dem man eine Lösung, die wenigstens ein Edelmetallsalz und ein Salz wenigstens eines Seltenen Erdmetalls enthält, der Sprühpyrolyse unter Sauerstoffzutritt unterwirft. Auf diese Weise erhält man ein Verbundpulver aus dem Oxid des Seltenen Erdmetalls und dem Edelmetall. Dieses Verbundpulver wird anschließend in einer Oberflächenschicht eines Katalysatorträgers aus Übergangsaluminiumoxid oder γ-Aluminiumoxid abgelagert und durch Sintern bei Temperaturen zwischen 400 und 600° C an Luft auf dem Träger verankert. Diese Wärmebehandlung wird in der Literatur zumeist als Calcinieren bezeichnet. Erwartungsgemäß lehrt die DE-34 36 400, dass man für den Katalysatorträger am besten γ-Aluminiumoxid verwendet, welches mit einem Seltenerdmetalloxid stabilisiert wird. Die Obergrenze der Temperatur, bei welcher sich die in der DE-34 36 400 A1 beschriebenen Katalysatoren betreiben lassen, liegt etwa bei 1050° C. Moderne Verbrennungsmotoren erreichen im Vollastbetrieb jedoch Abgastemperaturen bis zu 1200° C, in selteneren Fällen sogar bis zu 1300° C. Dem sind die bisher gebräuchlichen Katalysatoren nicht gewachsen.

Es ist deshalb die Aufgabe der vorliegenden Erfindung, insbesondere für die Reinigung der Abgase von Verbrennungskraftmaschinen geeignete Katalysatoren mit verbesserter Temperaturbeständigkeit zu schaffen, die eine hinreichende Wirksamkeit auch schon in der Startphase des Motors bei niedriger Abgastemperatur entfalten.

Diese Aufgabe wird gelöst durch Katalysatoren mit den im Anspruch 1 angegebenen Merkmalen und durch ein Verfahren mit den im Anspruch 5 angegebenen Merkmalen. Vorteilhafte Weiterbildungen sind Gegenstand der Unteransprüche.

Während die Fachwelt bisher davon ausgegangen ist, dass man bei Katalysatoren für die Reinigung von Abgasen am besten fährt, wenn man als Trägersubstanz für das katalytisch wirksame Edelmetall γ-Aluminiumoxid wählt, wurde nun gefunden, dass man ähnlich wirksame Katalysatoren erhält, wenn man den Katalysatorträger mit einer Oberflächenschicht aus einem nicht mit dem Edelmetall reagierenden Material aufbaut, welches auch ohne einen stabilisierenden Zusatz eine wenigstens bis 1200° C stabile Struktur hat und frei ist von dem sich bei so hohen Temperaturen umwandelnden γ-Aluminiumoxid und Übergangsaluminiumoxid, sofern man das katalytisch wirksame Edelmetall in Form eines feinen Verbundpulvers auf dem Träger in einer Oberflächenschicht des Trägers verankert, welches ausser dem Edelmetall eines oder mehrere mit dem Edelmetall nicht reagierende Oxide oder Mischoxide mit wenigstens bis 1200° C stabiler Struktur enthält und hergestellt worden ist, indem eine Lösung, die ein Salz eines oder mehrerer katalytisch wirksamen Edelmetalle sowie ein Salz eines oder mehrerer der die stabilen Oxide bzw. Mischoxide bildenden Metalle enthält, einer Sprühpyrolyse unter Sauerstoffzutritt unterworfen wird. Dieses Ergebnis war nicht zu erwarten, weil die Katalysatorträger, die sich bis wenigstens 1200° C nicht umwandeln, keine so große wirksame Katalysatoroberfläche bilden können wie das poröse γ-Aluminiumoxid. Die neue Erkenntnis, dass man trotz des Verzichtes auf γ-Aluminiumoxid und auf Übergangsaluminiumoxid erfindungsgemäß Katalysatoren mit ähnlicher Wirksamkeit schon bei niedrigen Temperaturen herstellen kann, eröffnet solchen Katalysatoren wegen ihrer stark verbesserten Temperaturbeständigkeit und der damit einhergehenden Verlängerung ihrer Lebensdauer weitverbreitete Einsatzmöglichkeiten vor allen Dingen im Bereich der Reinigung der Abgase von Verbrennungskraftmaschinen.

Für den Katalysatorträger kommen zahlreiche Materialien in Betracht. Bei der Auswahl der Materialien ist natürlich darauf zu achten, dass sie unter den Bedingungen des vorgesehenen Einsatzzweckes stabil sind, mit dem katalytisch wirksamen Edelmetall nicht reagieren und dass sich auf ihnen das edelmetallhaltige Verbundpulver fest verankern läßt. Geeignet sind metallische, mineralische und keramische Träger. Für metallische Träger kommen entsprechend wärmebeständige Eisenlegierungen, Edelstähle und Stähle mit hohem Nickelgehalt in Betracht. Bewährt haben sich auch ferritische, aluminiumhaltige Eisenbasislegierungen der Zusammensetzung 10 bis 30 Gew.-% Cr, 1 bis 10 Gew.-% Al, 0,05 Gew.-% C, 0,1 bis 3 Gew.-% Y, Rest Fe. Beispiele mineralischer Träger sind solche aus Cordierit oder aus Mullit. Beispiele keramischer Träger sind solche aus Thoriumoxid, Zirkondioxid und Siliziumnitrid. Beim Stand der Technik beschichtet man die Katalysatorträger mit γ-Aluminiumoxid oder Übergangsaluminiumoxid, in welchem das katalytisch wirksame Edelmetall verankert wird, wobei die Beschichtung üblicherweise nach dem Washcoat-Verfahren erfolgt. Erfindungsgemäß wird jedoch auf eine Beschichtung mit γ-Aluminiumoxid oder Übergangsaluminiumoxid verzichtet. Vielmehr kann das edelmetallhaltige Verbundpulver auf Träger aus den genannten Materialien aufgebracht werden, wenn deren Oberfläche so beschaffen ist, dass das Verbundpulver hinreichend fest darauf verankert werden kann, wozu diese Träger eine Oberflächenschicht aus α-Aluminiumoxid haben und auf dieser Schicht, möglicherweise auch in dieser Schicht das edelmetallhaltige Verbundpulver zu verankert wird. Es ist darüberhinaus möglich, den Katalysatorträger ingesamt aus α-Aluminiumoxid herzustellen.

Bei dem oben genannten aluminiumhaltigen Stahl läßt sich eine α-Aluminiumoxidschicht einfach dadurch herstellen, dass man diesen Stahl einige Zeit an Luft glüht, beispielsweise zwei Stunden lang bei 900° C. Dabei bildet sich auf der Oberfläche eine dünne (nicht mehr als einige »m dicke) α-Aluminiumoxidschicht aus, welche einerseits den Stahl vor Korrosion schützt und andererseits einen guten Haftgrund für die Beschichtung mit dem Verbundpulver darstellt. Es ist aber auch möglich, die Träger durch Spritzen, durch chemische (CVD) oder physikalische (PVD) Abscheidung aus der Gasphase mit α-Aluminiumoxid zu beschichten. Keramische und mineralische Träger werden am besten nach dem Washcoat-Verfahren beschichtet. Dabei wird eine wässrige Dispersion von α-Aluminiumoxidpulver hergestellt, in welche man den Träger eintaucht, trocknet und dann bei Temperaturen zwischen 300° C und 700° C calciniert.

Bei den Trägern kann es sich um Formkörper der unterschiedlichsten geometrischen Gestalt handeln, z.B. um Kugeln, Zylinder, Stäbchen, Fasern, Ringe usw. die auch als Schüttgut eingesetzt werden können. Für die Abgasreinigung in Automobilen verwendet man üblicherweise wabenförmige Träger, welche im Falle metallischer Träger aus einem gewellten, aufgewickelten Blech bestehen können.

Der Katalysatorträger sollte eine rauhe Oberfläche haben, denn das begünstigt die feste Verankerung des Verbundpulvers und vergrößert die wirksame Katalysatoroberfläche. Dazu sollen die oberflächlichen Poren, die die Rauhigkeit der Oberfläche bestimmen, größer, vorzugsweise viel größer sein als die Teilchen des Verbundpulvers. Besonders zu empfehlen ist es, den Durchmesser der Poren ca. 5-mal bis 50-mal so groß zu wählen wie die Teilchengröße des Verbundpulvers, deren Größe im Durchmesser zwischen 0,1 »m und 10 »m, vorzugsweise bei 1 »m liegen sollte. Für die Poren des Trägers, in welche das Verbundpulver eingelagert wird, sind Durchmesser zwischen 1 »m und 50 »m besonders zu empfehlen. Derartige Porengrößen lassen sich erreichen, wenn man den Träger mit einem Aluminiumoxidpulver beschichtet, dessen Teilchengröße zwischen 1 »m und 100 »m, vorzugsweise zwischen 5 »m und 50 »m liegt.

Das Verfahren der Sprühpyrolyse, nach welchem das Verbundpulver hergestellt wird, ist z.B. in der US-A 3 510 291, in der EP-0 012 202 A1 sowie in der DE-29 29 630 C2 beschrieben. Durch das Verfahren der Sprühpyrolyse erhält man sehr feine Verbundpulver dadurch, dass man die Edelmetalle und die oxidierbaren Metalle in einer Flüssigkeit löst und die Lösung in einem heißen Reaktor oder in eine Flamme hinein derart zerstäubt, dass das Lösungsmittel schlagartig verdampft und die entstehenden Feststoffpartikel bei einer Temperatur unterhalb der Schmelztemperatur der gelösten Metalle mit dem Sauerstoff in der Reaktoratmosphäre reagieren läßt, wobei sehr feine Pulverteilchen entstehen, in denen das Edelmetall in sehr feiner Verteilung neben dem Metalloxid, an welches es gebunden ist, vorliegt. Als Edelmetalle kommen in erster Linie Platin, Palladium, Rhodium und Ruthenium infrage. Als oxidische Bestandteile kommen für das Verbundpulver Ceroxid (CeO₂), Zirkonoxid (ZrO₂), Titandioxid (TiO₂), Magnesiumoxid (MgO ), Siliziumdioxid (SiO₂), α-Aluminiumoxid (α-Al₂O₃), Perowskit (CaTiO₃) und andere Titanate wie z.B. Bariumtitanat (BaTiO₃), Lanthanate und Aluminate in Betracht. Diese Oxide sind bis über 1200° C hinaus stabil und reagieren nicht mit den katalytisch wirksamen Edelmetallen. Vorzugsweise wählt man den oxidischen Bestandteil des Verbundpulvers danach aus, dass er unter den bestimmungsgemäßen Einsatzbedingungen des Katalysators als Promotor wirkt, d.h., die katalysierte Reaktion fördert. Hierin liegt ein spezifischer Vorteil des erfindungsgemäßen Verfahrens, welches es erlaubt, unabhängig von der Wahl des Trägermaterials das katalytisch wirksame Edelmetall äußerst fein verteilt an einen Promotor zu binden. Dabei kann man auch durchaus unterschiedliche Oxide im Verbundpulver miteinander kombinieren, um eine optimale Wirksamkeit des Katalysators zu erhalten. Für den Einsatz zur Abgasreinigung in Automobilen eignet sich Ceroxid als Promotor.

Sowohl die Wirksamkeit des Katalysators als auch die Haftfestigkeit des Verbundpulvers auf dem Katalysatorträger lassen sich verbessern, wenn man das Verbundpulver in einer Kugelmühle mahlt, bevor man es auf den Katalysatorträger aufbringt. Durch das Mahlen in der Kugelmühle werden die ursprünglich mehr kugelförmigen Agglomerate des Verbundpulvers unter Bildung von schuppenförmigen Pulverteilchen zerschlagen und dadurch in den ursprünglich kugeligen Agglomeraten eingeschlossenes Edelmetall freigelegt.

Den Edelmetallgehalt im Verbundpulver wählt man je nach Anwendungsfall zwischen 0,1 und 20 Gew.-%, vorzugsweise zwischen 1 und 10 Gew.-%. Die Menge des auf den Katalysatorträger aufgetragenen Verbundpulvers richtet sich danach, wieviel Edelmetall pro Liter des Katalysatorvolumens gefordert ist.

Nachstehend sind Ausführungsbeispiele angegeben, nach denen ein erfindungsgemäßer Katalysator hergestellt werden kann.

### Beispiel 1:

Als Katalysatorträger dient eine gewellte, aufgewickelte Metallfolie aus einem hochtemperaturbeständigen, ferritischen Stahl, welcher zum Korrosionsschutz und als Haftvermittler eine α-Aluminiumoxidschicht trägt. 100 Gewichtsteile eines α-Aluminiumoxidpulvers mit Teilchengrößen zwischen 5 und 50 »m werden in 250 Gewichtsteilen Wasser aufgeschlämmt. Der aus der aufgewickelten Stahlfolie bestehende Träger wird in diese Aufschlämmung eingetaucht, dann ausgeblasen, bei 120° C bis 150° C getrocknet und anschließend bei 550° C an Luft calciniert. Dieser Vorgang wird so oft wiederholt, bis der Träger 50 g pro Liter Trägervolumen α-Aluminiumoxid aufgenommen hat.

Durch Versprühen einer wässrigen Lösung von H₂PdCl₆ und Ce(NO₃)₄ in einem auf ca. 950° C aufgeheizten Reaktor mit sauerstoffhaltiger Atmosphäre wird ein feines Verbundpulver erzeugt, welches 6 Gewichtsteile Palladium und 94 Gewichtsteile Ceroxid enthält. Anschließend wird ein Gewichtsteil des Verbundpulvers in 50 Gewichtsteilen Wasser aufgeschlämmt und der mit α-Aluminiumoxid beschichtete Träger in diese Aufschlämmung eingetaucht, ausgeblasen, bei 150° C im Luftstrom getrocknet und anschließend bei Temperaturen zwischen 450° C und 600° C 1 bis 4 Stunden lang in Luft calciniert. Dieser Vorgang wird so oft wiederholt, bis der Träger 1,5 g Palladium pro Liter seines Volumens aufgenommen hat.

### Beispiel 2:

Als Katalysatorträger wird ein zylindrischer Wabenkörper aus Cordierit mit 62 Zellen pro cm² Querschnittsfläche mit einer Länge von 7,6 cm und mit einem Durchmesser von 2,54 cm verwendet. Dieser Träger wird in gleicher Weise wie im ersten Beispiel mit α-Aluminiumoxid beschichtet, bis er 25 Gew.-% (bezogen auf das Gewicht des Cordieritkörpers) α-Aluminiumoxid aufgenommen hat.

Durch Versprühen einer wässrigen Lösung von H₂PtCl₆ und Ce(NO₃)₄ in einem auf ca. 950° C aufgeheizten Reaktor mit sauerstoffhaltiger Atmosphäre wird ein feines Verbundpulver erzeugt, welches nebeneinander 6 Gewichtsteile Platin und 94 Gewichtsteile Ceroxid enthält. Anschließend wird 1 Gewichtsteil des Verbundpulvers in 50 Gewichtsteilen Wasser aufgeschlämmt und der mit α-Aluminiumoxid beschichtete Cordierit-Träger darin eingetaucht, im Luftstrom bei 150° C getrocknet und bei 500° C in Luft calciniert. Dieses wird so oft wiederholt, bis der Träger 1,5 g Platin pro Liter des Trägervolumens aufgenommen hat.

### Vergleichsbeispiel:

Als Katalysatorträger wird ein Wabenkörper aus Cordierit wie im Beispiel 2 verwendet.

100 Gewichtsteile feinkörmiges γ-Aluminiumoxidpulver und 4 Gewichtsteile einer Mischung aus feinkörnigem Ceroxid (CeO₂)- und Lanthanoxid (La₂O₃) mit Teilchengrößen kleiner als 100 »m werden in 250 Gewichtsteilen Wasser aufgeschlämmt. Der Cordierit-Wabenkörper wird darin eingetaucht, getrocknet und calciniert, wie im Beispiel 1 angegeben, wobei vor dem Auftragen des katalytisch wirksamen Edelmetalls die Beschichtung noch mit 3 bis 5 Gew.-% Eisenoxid (Fe₂O₃) aktiviert wird, welches der wässrigen Aufschlämmung zugesetzt wird.

Der beschichtete Katalysatorträger wird in eine wässrige Lösung von H₂PtCl₆ und Rh(NO₃)₃ eingetaucht, welche Platin und Rhodium im Gewichtsverhältnis Pt:Rh = 5:1 enthält. Der mit der Edelmetallsalzlösung getränkte Wabenkörper wird getrocknet und bei 500°C in reduzierender Atmosphäre behandelt, um die Edelmetallverbindungen zum Edelmetall zu reduzieren.

Der Tränkvorgang wird so vorgenommen, dass der Wabenkörper 1,5 g Edelmetall pro Liter des Wabenkörpervolumens aufnimmt.

Die gemäß den vorstehenden Beispielen hergestellten Katalysatoren wurden auf ihre katalytische Aktivität überprüft. Die Überprüfung erfolgte in einem Reaktor. Die Gaszusammensetzung im Reaktor entsprach einem synthetischen Abgas mit den Bestandteilen CO, NO, und Kohlenwasserstoffe (Propan und Propen im Verhältnis 1:1) in einer Zusammensetzung, wie sie bei λ = 1,0 ( λ gibt das stöchiometrische Verhältnis der Luftmenge zur Brennstoffmenge im Luft/Brennstoff-Gemisch an) vorliegt.

Die Überprüfung wurde bei steigender Temperatur mit einer Katalysatorbelastung von 50 000 1 Abgas pro Stunde und pro Liter Katalysatorvolumen durchgeführt. Bestimmt wurde die Temperatur, bei der sowohl der Stickoxidanteil als auch die Kohlenwasserstoffanteile und der Kohlenmonoxidanteil um jeweils 90 % gesenkt werden konnten. Die Messungen wurden zunächst mit den frischen Katalysatoren vorgenommen. Danach wurden die Katalysatoren gealtert, indem sie in einem elektrischen Ofen auf eine Temperatur von 1000° C aufgeheizt, bei dieser Temperatur in Luft 4 Stunden gehalten und dann wieder abgekühlt wurden. Danach wurde erneut gemessen, bei welcher Temperatur 90 % Umsatz mit dem Katalysator erreicht wurden. Die Ergebnisse sind in der nachstehenden Tabelle angegeben.

| Betriebstemperaturen (°C) für 90 % Umsatz | | | | | | |
|---|---|---|---|---|---|---|
| | frischer Katalysator | | | gealterter Katalysator | | |
| | CO | HC | NO | CO | HC | NO |
| Beispiel 1 | 258 | 292 | 262 | 254 | 296 | 260 |
| Beispiel 2 | 242 | 290 | 246 | 302 | 338 | 300 |
| Vergleichsbeispiel | 198 | 248 | 200 | 336 | 400 | 318 |

Die Zahlen zeigen, dass die Betriebstemperatur, die für 90 % Umsatz benötigt wird, bei dem Katalysator nach dem Stand der Technik (Vergleichsbeispiel) durch die Alterung stark ansteigt. Darin spiegelt sich die trotz stabilisierender Zusätze unbefriedigende thermische Stabilität des γ-Aluminiumoxids wieder. Bei den erfindungsgemäßen Katalysatoren führt die Alterung hingegen zu keiner (Beispiel 1) bzw. zu einer vergleichsweise geringen Erhöhung der für 90 % Umsatz erforderlichen Betriebstemperatur, wobei in beiden Fällen die für 90 % Umsatz erforderlichen Betriebstemperaturen niedriger liegen als beim Stand der Technik. Der Vergleich zeigt, dass erfindungsgemäß hergestellte Katalysatoren eine bessere Temperaturbeständigkeit und eine verbesserte Wirksamkeit schon in der Startphase eines Verbrennungskraftmotors aufweisen.

## Patentansprüche

1. Katalysator bestehend aus einem metallischen, mineralischen oder keramischen Träger mit einer Oberflächenschicht aus α-Aluminiumoxid, worauf ein sehr feines Verbundpulver verankert ist, dessen Teilchengröße kleiner als 10 »m ist, welches zum kleineren Teil aus mindestens einem katalytisch wirksamen Edelmetall und zum überwiegenden Teil aus einem oder mehreren Metalloxiden bzw. Metallmischoxiden mit einer wenigstens bis 1200°C stabile Struktur und mit den Edelmettallen nicht reagieren besteht, wobei die Oxiden bzw. Mischoxiden aus der Gruppe bestehend aus Ceroxid, Titanoxid, Magnesiumoxid, Siliziumdioxid, α-Aluminiumoxid, Perowskit, Titanate, Lanthanate und Aluminate ausgewählt werden, und welches hergestellt ist, indem eine Lösung, die ein Salz des mindestens einen katalytisch wirksamen Edelmetalls und ein Salz eines oder mehrerer Metalle enthält, die jene Metalloxide bzw. Metallmischoxide bilden, enthält, einer Sprühpyrolyse unter Sauerstoffzutritt unterworfen wird.

2. Katalysator nach Anspruch 1, dadurch gekennzeichnet, dass das Verbundpulver eine Teilchengröße kleiner als 5 »m hat.

3. Katalysator nach Anspruch 2, dadurch gekennzeichnet, dass die α-Aluminiumoxidpulverteilchen im Durchmesser ungefähr zehnmal so groß sind wie die Teilchen des Verbundpulvers.

4. Verfahren zum Herstellen von Katalysatoren mit den im Anspruch 1 angegebenen Merkmalen durch
- Herstellen einer Lösung, die ein Salz eines oder mehrerer katalytisch wirksamer Edelmetalle und ein Salz eines oder mehrerer Metalle enthält, die Oxide oder Mischoxide aus der Gruppe bestehend aus Ceroxid Titanoxid, Magnesiumoxid, Siliziumdioxid, α-Aluminiumoxid, Perowskit, Titanate, Lanthanate und Aluminate bilden,
- Unterwerfen dieser Lösung der Sprühpyrolyse unter Sauerstoffzutritt,
- Aufbringen des so erzeugten Verbundpulvers auf einen metallischen, mineralischen oder keramischen Träger mit einer Oberflächenschicht aus α-Aluminiumoxid und Verankern darauf durch Calcinieren.

5. Verfahren nach Anspruch 4, dadurch gekennzeichnet, dass es auf Träger aus α-Aluminiumoxid angewandt wird.

6. Verfahren nach Anspruch 4, dadurch gekennzeichnet, dass es auf Träger angewandt wird, die mit α-Aluminiumoxid beschichtet sind.

7. Verfahren nach einem der vorstehenden Ansprüche, dadurch gekennzeichnet, dass es auf Träger mit einer rauhen Oberfläche an gewandt wird, wobei die oberflächlichen Poren, die die Rauhigkeit der Oberflächen bestimmen, größer, vorzugsweise viel größer sind als die Teilchen des Verbundpulvers.

8. Verfahren nach Anspruch 7, dadurch gekennzeichnet, dass die Poren im Durchmesser ca. fünfmal bis fünfzigmal so groß sind wie die Teilchen des Verbundpulvers.

9. Verfahren nach Anspruch 7 oder 8, dadurch gekennzeichnet, dass die Teilchen des Verbundpulvers im Durchmesser zwischen 0,1 »m und 10 »m, vorzugsweise bei 1 »m groß sind.

10. Verfahren nach Anspruch 7, 8 oder 9, dadurch gekennzeichnet, dass die Poren in der Oberfläche des Trägers im Durchmesser zwischen 1 »m und 50 »m groß sind.

11. Verfahren nach Anspruch 6, dadurch gekennzeichnet, dass die Beschichtung des Trägers mit einem α Aluminiumoxidpulver erfolgt, dessen Teilchengröße zwischen 1 »m und 100 »m, vorzugsweise zwischen 5 »m und 50 »m liegt.

12. Verfahren nach einem der Ansprüche 6 bis 11, dadurch gekennzeichnet, dass für das Verbundpulver solche Metalloxide ausgewählt werden, die unter den bestimmungsgemäßen Einsatzbedingungen des Katalysators die Anlagerung der katalytisch umzusetzenden Substanzen begünstigen.

13. Verfahren nach Anspruch 12, dadurch gekennzeichnet, dass für die Reinigung der Abgase von Verbrennungskraftmaschinen als Metalloxidbestandteil des Verbundpulvers Ceroxid gewählt wird.

14. Verfahren nach einem der Ansprüche 4 bis 13, dadurch gekennzeichnet, dass das Verbundpulver vor dem Auftragen auf den Träger zur Erzielung einer schuppenförmigen Teilchenstruktur in einer Kugelmühle gemahlen wird.

## Claims

1. Catalyst composed of a metallic, mineral or ceramic support having a surface layer composed of α-aluminium oxide to which there is anchored a very fine composite powder whose particle size is less than 10 »m and which is composed, for the lesser part, of at least one catalytically active noble metal and, for the predominant part, of one or more metal oxides or mixed metal oxides having a structure which is stable up to at least 1200°C, which oxides do not react with the noble metals, the oxides or mixed oxides being selected from the group comprising cerium oxide, titanium oxide, magnesium oxide, silicon dioxide, α-aluminium oxide, perovskite, titanates, lanthanates and aluminates, and which powder is prepared by subjecting a solution containing a salt of the at least one catalytically active noble metal and a salt of one or more metals which form said metal oxides or mixed metal oxides to a spray pyrolysis with oxygen access.

2. Catalyst according to Claim 1, characterized in that the composite powder has a particle size of less than 5 »m.

3. Catalyst according to Claim 2, characterized in that the α-aluminium oxide powder particles are approximately ten times as large in diameter as the particles of the composite powder.

4. Method for preparing catalysts having the features specified in Claim 1 by
- preparing a solution which contains a salt of one or more catalytically active noble metals and a salt of one or more metals which form oxides or mixed oxides from the group comprising cerium oxide, titanium oxide, magnesium oxide, silicon dioxide, α-aluminium oxide, perovskite, titanates, lanthanates and aluminates,
- subjecting said solution to spray pyrolysis with oxygen access,
- applying the composite powder so produced to a metallic, mineral or ceramic support having a surface layer composed of α-aluminium oxide and anchoring it thereto by calcination.

5. Method according to Claim 4, characterized in that it is applied to supports composed of α-aluminium oxide.

6. Method according to Claim 4, characterized in that it is applied to supports which are coated with α-aluminium oxide.

7. Method according to one of the preceding claims, characterized in that it is applied to supports having a rough surface, the superficial pores which determine the roughness of the surfaces being greater, preferably much greater, than the particles of the composite powder.

8. Method according to Claim 7, characterized in that the pores are approximately five times to fifty times as large in diameter as the particles of the composite powder.

9. Method according to Claim 7 or 8, characterized in that the particles of the composite powder are between 0.1 »m and 10 »m, preferably 1 »m, in diameter.

10. Method according to Claim 7, 8 or 9, characterized in that the pores in the surface of the support are between 1 »m and 50 »m in diameter.

11. Method according to Claim 6, characterized in that the support is coated with an α-aluminium oxide powder whose particle size is between 1 »m and 100 »m, preferably between 5 »m and 50 »m.

12. Method according to one of Claims 6 to 11, characterized in that those metal oxides are selected for the composite powder which favour the attachment of the substances to be catalytically converted under the intended conditions of use of the catalyst.

13. Method according to Claim 12, characterized in that, for the cleaning of the exhaust gases of internal combustion engines, cerium oxide is chosen as metal oxide component of the composite powder.

14. Method according to one of Claims 4 to 13, characterized in that the composite powder is ground in a ball mill before application to the support in order to achieve a scale-like particle structure.

## Revendications

1. Catalyseur consistant en un support métallique, minéral ou céramique comportant une couche superficielle d'alumine α sur laquelle est fixée une poudre composée très fine dont la grosseur des particules est inférieure à 10 »m et qui se compose, pour une petite partie, d'un métal précieux à effet catalytique et, pour la majeure partie, d'un ou plusieurs oxydes métalliques ou oxydes métalliques mixtes ayant une structure stable jusqu'à 1200 °C au moins et ne réagissant pas avec les métaux précieux, les oxydes ou les oxydes mixtes étant choisis dans le groupe composé de l'oxyde cérique, de l'oxyde de titane, de l'oxyde de magnésium, du dioxyde de silicium, de l'alumine α, de la perovskite, des titanates, des lanthanates et des aluminates, ladite poudre étant produite en soumettant une solution renfermant un sel d'au moins un métal précieux à effet catalytique et un sel d'un ou plusieurs métaux, formant lesdits oxydes métalliques ou oxydes métalliques mixtes, à une pyrolyse par pulvérisation sous apport d'oxygène.

2. Catalyseur selon la revendication 1 caractérisé en ce que la poudre composée possède une grosseur de particules inférieure à 5 »m .

3. Catalyseur selon la revendication 2 caractérisé en ce que les particules de poudre d'alumine α ont un diamètre approximativement dix fois plus grand que celui des particules de la poudre composée.

4. Procédé de fabrication de catalyseurs conformes à la revendication 1 comprenant :
- la production d'une solution renfermant un sel d'un ou plusieurs métaux formant les oxydes ou oxydes mixtes du groupe composé de l'oxyde cérique, de l'oxyde de titane, de l'oxyde de magnésium, du dioxyde de silicium, de l'alumine α, de la perovskite, des titanates, des lanthanates et des aluminates,
- la soumission de cette solution à une pyrolyse par pulvérisation sous apport d'oxygène,
- le dépôt de la poudre composée ainsi fabriquée sur un support métallique, minéral ou céramique comportant une couche superficielle d'alumine α et la fixation de ladite poudre par calcination.

5. Procédé selon la revendication 4 caractérisé en ce qu'il est appliqué à des supports en alumine α.

6. Procédé selon la revendication 4 caractérisé en ce qu'il est appliqué à des support recouverts d'alumine α.

7. Procédé selon l'une quelconque des revendications 4 à 6 caractérisé en ce qu'il est appliqué à des support présentant une surface rugueuse, les pores superficiels qui déterminent la rugosité de ladite surface étant plus gros , de préférence beaucoup plus gros que les particules de la poudre composée.

8. Procédé selon la revendication 7 caractérisé en ce que les pores présentent un diamètre environ cinq à cinquante fois plus grand que celui des particules de la poudre composée.

9. Procédé selon l'une quelconque des revendications 7 ou 8 caractérisé en ce que les particules de la poudre composée présentent un diamètre compris entre 0,1 »m et 10 »m, de préférence voisin de 1 »m.

10. Procédé selon l'une quelconque des revendications 7, 8, ou 9 caractérisé en ce que les pores de la surface du support présentent un diamètre compris entre 1 »m et 50 »m.

11. Procédé selon la revendication 6 caractérisé en ce que le recouvrement du support est effectué avec de la poudre d'alumine α, dont la grosseur des particules est comprise entre 1 »m et 100 »m, de préférence entre 5 »m et 50 »m.

12. Procédé selon l'une quelconque des revendications 6 à 11 caractérisé en ce que l'on choisit, pour la poudre composée, des oxydes métalliques qui favorisent, dans les conditions de fonctionnement déterminées du catalyseur, l'incrustation des substances à décomposer par catalyse.

13. Procédé selon la revendication 12 caractérisé en ce que, pour l'épuration des gaz d'échappement des machines à combustion interne, on choisit comme oxyde métallique entrant dans la composition de la poudre composée, l'oxyde cérique.

14. Procédé selon l'une quelconque des revendications 4 à 13 caractérisé en ce que la poudre composée est broyée, préalablement à son dépôt sur le support, dans un broyeur à galets, pour procurer aux particules une structure imbriquée.
